# EUROPÄISCHE PATENTSCHRIFT

(11) **EP 4 466 491 B1**
(45) Veröffentlichungstag und Bekanntmachung des Hinweises auf die Patenterteilung: **11.03.2026**
(21) Anmeldenummer: 23707866.2
(22) Anmeldetag: 13.01.2023
(51) Int. Cl.: F21S 43/237, F21S 43/245, B60Q 1/28, B60Q 1/26, B60R 19/52

(54) **BAUGRUPPE DES LEUCHTENDEN KÜHLERGRILLS**
ILLUMINATED RADIATOR GRILLE ASSEMBLY
ENSEMBLE GRILLE DE RADIATEUR ÉCLAIRÉ

(30) Priorität: 17.01.2022 CZ 20220021
(43) Veröffentlichungstag der Anmeldung: 27.11.2024
(73) Patentinhaber: Skoda Auto A.S., 293 01 Mladá Boleslav II (CZ)
(72) Erfinder: KNEBL, Pavel, 29301 Mladá Boleslav (CZ)
(86) Internationale Anmeldenummer: PCT/CZ2023/000001
(87) Internationale Veröffentlichungsnummer: WO 2023/134802

(56) Entgegenhaltungen:
- WO-A1-2014/179824
- WO-A1-2018/073678
- WO-A1-2022/199729
- DE-A1- 10 340 723
- JP-A- 2021 009 791

## Beschreibung

### Technisches Gebiet

Die vorliegende Erfindung betrifft einen Kühlergrill, der Beleuchtungselemente aufweist, konkret einen Kühlergrill mit lichtundurchlässigen Rippen mit Ausschnitten, in denen ein Lichtleiterteil von hinten eingesetzt ist.

### Stand der Technik

Der Fahrzeugkühlergrill dient in erster Linie dazu, die Luftdurchlässe zum Motor, Fahrzeugkühler und/oder in den Innenraum durch die Klimaanlage abzugrenzen. Standardmäßig handelt es sich um ein in der Montageöffnung im Fahrzeugfrontbereich befestigtes Kunststoffteil, wobei dieses Kunststoffteil eine Reihe von Luftdurchgangsöffnung aufweist, In den letzten Jahren wurde der Kühlergrill oft durch eine Beleuchtungsbaugruppe ergänzt oder ersetzt; ein solcher leuchtender Kühlergrill beleuchtet dann den Bereich vor dem Fahrzeug und erhöht die Sichtbarkeit des Fahrzeugs, so dass er beispielsweise als Tagfahrlicht oder in einem Nachtmodus als Bestandteil des Stand-/Abblendlichts dienen kann. Darüber hinaus ist der leuchtende Kühlergrill ein sehr markantes Designelement des Fahrzeuges, da er eine relativ große Fläche im Fahrzeugfrontbereich abdeckt, der am meisten sichtbar ist. Die Ausgestaltung des leuchtenden Kühlergrills kann dann beispielsweise die Fahrzeuge einer bestimmten Marke deutlich von anderen Fahrzeugen differenzieren. Leuchtende Kühlergrills können weiterhin zur Luftzufuhr verwendet werden, oder sie können die Montageöffnung für den Kühlergrill vollständig abschließen und die Luft kann dann beispielsweise durch anderes Gitter im Stoßfänger zugeführt werden.

Ein Beispiel eines beleuchteten Kühlergrills ist beispielsweise aus dem Dokument CZ 2018 00 475 bekannt. Die beschriebene Lösung umfasst eine Lichtquelle, einen Lichtleiter, einen Rahmen und eine durchsichtige Frontabdeckung, die zusammen eine geschlossene Baugruppe bilden, wobei die spezifische Form dieser Komponenten das endgültige Erscheinungsbild des Kühlergrills und des emittierten Lichtes prägt. Diese Lösung erfordert jedoch den Austausch eines standardmäßig undurchsichtigen Kühlergrills und blockiert die Luftzufuhr, was für einige Fahrzeugtypen nicht geeignet sein muss. Darüber hinaus haben die vollständig aus einem lichtdurchlässigen Material erzeugten Kühlergrills eine geringere Beständigkeit gegen Schmutz, Kratzer oder Aufprall als herkömmliche lichtundurchlässige Kühlergrills.

Ein weiterer leuchtender Kühlergrill ist aus dem Dokument EP 3 741 619 A1 bekannt. Die Lösung aus diesem Dokument umfasst einen Kühlergrill, der eine Reihe von horizontalen Wellrippen aufweist, die aus einem durchsichtigen Material, einem Lichtleiter und einem undurchsichtigen Rahmen gebildet werden, wobei das durchsichtige Material als Linse für die Lichtausstrahlung vom Lichtleiter dient. Aber auch diese Lösung erfordert, dass der ursprüngliche Kühlergrill mit undurchsichtigen Rippen durch einen völlig neuen Kühlergrill teilweise aus durchsichtigem Material ersetzt wird.

Bekannte Lösungen von leuchtenden Kühlergrills, welche den ursprünglichen Kühlergrill aus lichtundurchlässigem Material ergänzt um Lichtquellen, in der Regel LED-Quellen, umfassen, strahlen dann das Licht hauptsächlich indirekt, indem sie das Gitter oder die Rippen auf dem Kühlergrill beleuchten, d.h. die Lichtquelle beleuchtet einen lichtundurchlässigen Teil und von ihm wird das Licht vor das Fahrzeug reflektiert. Diese Lösungen haben jedoch nur begrenzte Möglichkeiten in Bezug auf die Modifikation des Erscheinungsbildes des leuchtenden Kühlergrills und in Bezug auf die Intensität und Homogenisierung des ausgestrahlten Lichts.

Ein weiterer leuchtender Kühlergrill ist aus dem Dokument WO 2005/ 018 987 A1 bekannt. Dieses Dokument beschreibt einen Kühlergrill mit lichtundurchlässigen Rippen, wobei dieser Kühlergrill von hinten mit einem Lichtleiter mit Punktlichtquellen an den Enden hinterleuchtet wird. Das Licht aus dem Lichtleiter beleuchtet also die Rippen, die das Licht vor das Fahrzeug reflektieren. In einer Ausführung dieser Lösung ist der Lichtleiter so angeordnet, dass er durch die Luftdurchgangsöffnungen im Kühlergrill sichtbar ist, so dass der Lichtleiter auch direkt vor das Fahrzeug leuchtet. Die Homogenität des ausgestrahlten Lichts ist bei dieser Lösung jedoch unbefriedigend, da die vom Lichtleiter weiter entfernten Rippen mit geringerer Intensität und auf einem kleineren Teil ihrer Fläche beleuchtet werden, als die dem Lichtleiter näherliegenden Rippen, und in der Ausführung mit einem sichtbaren Lichtleiter ist dieser Lichtleiter teilweise durch die Rippen bedeckt. Ein weiterer Nachteil dieser Lösung ist die geringere Modifizierbarkeit des Erscheinungsbildes des Kühlergrills, der direkt leuchtende Teil des Kühlergrills ist nur der Teil des verwendeten Lichtleiters mit einem konstanten Querschnitt, der durch die Lücken im Kühlergrill sichtbar ist.

Es wäre also geeignet, eine Lösung vorzuschlagen, welche einen leuchtenden Fahrzeugkühlergrill bietet, in dem der ursprüngliche lichtundurchlässige Kühlergrill integriert und er gleichzeitig eine ausreichend homogene Lichtausstrahlung ermöglichen wird.

Ferner offenbart die Druckschrift WO 2018/ 073 678 A1 eine Beleuchtungsvorrichtung für ein Kraftfahrzeug, die Druckschrift WO 2014/ 179 824 A1 offenbart eine Beleuchtungseinrichtung für Kraftfahrzeuge, die Druckschrift JP 2021 - 009 791 A offenbart eine Lichtemissionsvorrichtung, die Druckschrift DE 103 40 723 A1 offenbart einen Frontbereich eines Fahrzeugs, und die Druckschrift WO 2022/ 199 729 A1 offenbart eine Baugruppe des leuchtenden Kühlergrills.

### Darstellung der Erfindung

Die Nachteile der aus dem Stand der Technik bekannten Lösungen werden partiell durch die Baugruppe eines leuchtenden Kühlergrills für den Einbau im Fahrzeugfrontbereich gelöst. Diese Baugruppe umfasst einen Kühlergrill aus lichtundurchlässigem Material, der eine nichtleere Menge von Rippen aufweist, welche die Luftdurchgangsöffnungen begrenzen, wobei die Baugruppe ferner eine Lichtleiste, einen Lichtleistenträger, einen aus zumindest teilweise lichtdurchlässigem Material erzeugten Lichtleiterteil und eine Rückabdeckung umfasst, die für die Anordnung zwischen den Kühlergrill und dem Raum unter der Fahrzeugfrontklappe bestimmt ist. Der Kühlergrill ist mit der Rückabdeckung verbunden und die Lichtleiste wird durch den Lichtleistenträger an die Rückabdeckung befestigt und die Lichtleiste ist zwischen der Rückabdeckung und dem Kühlergrill angeordnet und verläuft über den größten Teil der Breite der Baugruppe. Jede Rippe aus der Menge der Rippen umfasst in der Richtung von der Rückabdeckung hin einen Ausschnitt für den Lichtleiterteil, wobei der Lichtleiterteil entlang der Lichtleiste zwischen der Lichtleiste und dem Kühlergrill verläuft und mit einem Teil seines Rauminhaltes in die Luftdurchgangsöffnungen in den Kühlergrill eingreift. Der Lichtleiterteil umfasst eine obere Oberfläche, eine untere Oberfläche und eine vordere Oberfläche.

Die Größe des Teils dieses Rauminhalts ergibt sich einerseits durch die Breite der Rippen und anderseits durch die Tiefe der Ausschnitte und dadurch, wie tief der Lichtleiterteil in die Ausschnitte angeordnet ist.

Die Lichtleiste dient also als Lichtquelle und das Licht der Lichtleiste wird durch das Lichtleiterteil geleitet und durch die in den Luftdurchgangsöffnungen sichtbaren teile des Lichtleiterteils ausgestrahlt. Die Länge der Lichtleiste von mindestens einer Hälfte, d.h. dem Großteil, bevorzugt mindestens von zwei Dritteln der Breite des Kühlergrills sorgt für eine ausreichende Ausleuchtung der Baugruppe. Die Anzahl der Rippen am Kühlergrill kann beispielsweise von acht bis zu dreißig sein. Es können jedoch beispielsweise auch nur zwei sein, damit zwischen denen eine Luftdurchgangsöffnung gebildet wird, aber es können auch einige Dutzend, beispielsweise auch mehr als hundert sein. Bevorzugt sind die Rippen jedoch ungefähr vertikal, beispielsweise weichen sie um höchstens 45° von der Vertikale, vorteilhafter höchstens um 30° ab. Die Rückabdeckung kann beispielsweise aus Kunststoff sein und kann Öffnungen enthalten, durch welche die Luft von innen des Kühlergrills weiter unter die Frontklappe strömt. Die Rückabdeckung kann die Befestigung der Baugruppe in der Montageöffnung vermitteln.

Außer der Rippen aus der genannten Menge von Rippen kann der Kühlergrill auch weitere Rippen umfassen, welche keinen Ausschnitt für den Lichtleiterteil aufweisen. Insbesondere kann es sich um die Randrippen handeln, möglich ist auch beispielsweise so einen Kühlergrill bilden, an dem die mittlere Rippe oder einige mittlere Rippen keine Ausschnitte für Lichtleiterteil aufweisen. Beispielsweise kann die Baugruppe zwei Lichtleiterteile mit zwei Lichtleiterleisten umfassen, mit einer Lücke mitten zwischen ihnen, wo der Kühlergrill nicht durchleuchtet ist. Die Ausschnitte für den Lichtleiterteil greifen mindestens in ein Drittel, vorzugsweise in die Hälfte und noch bevorzugter wenigstens in zwei Drittel der Stärke dieser Rippen ein. Der Lichtleiterteil greift dabei vorteilhaft in den größten Teil der Ausschnitttiefe, z.B. wenigstens in zwei Drittel ein. Vorteilhaft ist ein Teil des Lichtleiterteils, insbesondere der äußerste Frontbereich, mit den Wänden des Ausschnitts für den Lichtleiterteil von oben, von unten sowie von der unteren Seite umschlossen. Der Lichtleiterteil kann auf die Seiten des Ausschnitts eng anliegen oder können dazwischen Luftlücken sein, eventuell kann er irgendwo anliegen und anderswo nicht. Bevorzugt sind diese Luftlücken nicht sehr groß, beispielsweise sind sie kleiner als die Breite der Rippen oder vorzugsweise als die Höhe des Abschnitts des Lichtleiterteils umgeben durch Ausschnitte, damit sich in der Nähe des Lichtleiterteils die Seitenwände befinden, die vom Lichtleiterteil beleuchtet werden können. Dadurch wird das Design des Kühlergrills nicht durch die Ausschnitte in Rippen selbst gestört.

Dank der Anordnung des Lichtleiterteils in die Ausschnitte für Lichtleiterteil ist es möglich, diesen Lichtleiterteil mehr vorne anzuordnen, bei der Bewahrung der Stärke der Rippen, somit auch deren Festigkeit, am größten Teil deren Höhe. Dadurch ist der Lichtleiterteil besser sichtbar und leuchtet heller vor das Fahrzeug, als wenn er sich tiefer in der Baugruppe befinden würde. Darüber hinaus ist durch diese Anordnung des Lichtleiterteils eine klare Beleuchtung der Seitenwände der Rippen und weiteren Oberflächen des Kühlergrills, die hin zu den Luftdurchgangsöffnungen ausgerichtet sind. Die erfindungsgemäße Baugruppe gewährt somit nicht nur direkte Beleuchtung vor dem Fahrzeug mittels des vom Lichtleiterteil ausgestrahlten Lichts, aber auch indirekte Beleuchtung mit dem vom Lichtleiterteil ausgestrahlten und von der Kühlergrilloberfläche reflektierten Licht. Die beleuchteten Oberflächen des Kühlergrills verlaufen dabei entlang der Tiefe der Luftdurchgangsöffnungen, sodass diese beleuchteten Oberflächen beim Frontanblick auf den erleuchteten Kühlergrill einen plastischen Eindruck erzeugen, im Unterschied zu den gewöhnlichen Kühlergrillen mit Lichtquellen, bei denen üblicherweise nur die Lichtlinie oder die hinter dem Kühlergrill in einer Fläche angeordneten Lichtpunkte sichtbar sind. Die Verwendung von Ausschnitten für den Lichtleiterteil verleiht der Baugruppe daher einen besseren Designeffekt, d.h. eine verbesserte Optik, sowie eine höhere Leuchtkraft bei gleichem Leistungsbedarf.

Gleichzeitig ist die Baugruppe im Vergleich zu Kühlergrills aus lichtdurchlässigem Material widerstandsfähiger gegen Verschmutzung oder Beschädigung und sorgt für eine hellere und homogenere Beleuchtung als Kühlergrills mit LED-Lichtquellen, die beispielsweise zwischen den Rippen angeordnet sind. Das Material zumindest eines Teils des Lichtleiterteils überträgt zumindest einen Teil des Lichts, das von der Lichtleiste darauf fällt, und leitet dieses Licht nach vorne. Vorzugsweise ist dieses Material klar, beispielsweise Plexiglas. Einige Teile des Lichtleiterteils können auch aus einem lichtundurchlässigen Kunststoff bestehen, wie z.B. seine Halterungen für die Befestigung an den hinteren Rahmen oder an den Lichtleistenhalter.

Eine Lichtleiste kann einen Lichtleiter mit zwei freien Enden umfassen, wobei jedes freie Ende des Lichtleiters mit einer Lichtquelle versehen ist. Vorzugsweise handelt es sich dabei um LED-Lichtquellen, wobei eine Lichtquelle dann auch mehrere LEDs umfassen kann. Die Verwendung eines Lichtleiters erhöht die Homogenität des ausgestrahlten Lichts und im Vergleich zu einer aus mehreren Punktlichtquellen bestehenden Lichtleiste auch die Herstellung günstiger macht und den Einbau erleichtert.

Der Lichtleiterteil umfasst eine obere Oberfläche, untere Oberfläche und vordere Oberfläche, wobei jeder Ausschnitt für den Lichtleiterteil die komplette vordere Oberfläche und einen Teil der oberen Oberfläche und der unteren Oberfläche an einem Längenabschnitt des Lichtleiterteils umschließt. Der Lichtleiterteil kann auch an seinem vorderen Ende durch einen Ausschnitt befestigt werden, sodass der Auftritt von Schwingungen am Lichtleiterteil während der Fahrt reduziert wird. Ferner kann der Lichtleiterteil homogenisierende Elemente wie Ritzen, Vorsprünge, Vertiefungen, abgewinkelte Flächen, im Material verteilte reflektierende Partikel, usw. umfassen. Der Lichtleiterteil kann auch farbig sein, beispielsweise orange, wenn die erfindungsgemäße Baugruppe als Blinker dienen soll, oder blau bzw. orange, wenn es als Warnleuchte dienen soll.

Mindestens eine der Luftdurchgangsöffnungen wird vorteilhaft durch die obere Oberfläche, die untere Oberfläche und ein Paar von Seitenflächen definiert, die Bestandteil des Kühlergrills sind, wobei die Seitenflächen hauptsächlich Bestandteil der Rippen sind. Durch die Seitenflächen geht also der Ausschnitt für den Lichtleiterteil durch. Der Lichtleiterteil greift bevorzugt in den Raum zwischen der oberen Oberfläche und der unteren Oberfläche der Luftdurchgangsöffnungen ein. Vorzugsweise gilt dies für alle Luftdurchgangsöffnungen, die durch Rippen aus der Menge der Rippen eingegrenzt sind. Durch die Anordnung des Lichtleiterteils zwischen diesen Flächen werden auch die Ober-und Unterseite durch den Lichtleiterteil beleuchtet, was den oben beschriebenen plastischen Effekt der beleuchteten Kühlergrillteile verstärkt. Bevorzugt wird der größte Anteil des Lichts aus dem Lichtleiterteil nach vorne und der kleinere Anteil nach oben, unten und zu den Seiten abgestrahlt, wobei dieser kleinere Anteil somit eine indirekte Beleuchtung des Kühlergrills besorgt.

Der Lichtleiterteil kann teilweise aus lichtundurchlässigem Material bestehen. Ein lichtundurchlässiges Material kann zum Beispiel die Bestandteile eines Lichtleiterteiles für seine Befestigung an seine Stelle bilden. Beispielsweise kann es sich auch über einen Teil bestimmter Fläche für den Lichtaustritt erstrecken, um die Form oder Intensität des von dieser Oberfläche emittierten Lichts zu beeinflussen.

Vorteilhafterweise umfasst der Lichtleiterteil einen vorderen Vorsprung und zwei hintere Vorsprünge, die alle über den größten Teil der Länge des Lichtleiterteils verlaufen, z.B. über seine gesamte Länge, d.h. eine horizontale Dimension annähernd senkrecht zur Fahrzeuglängsachse. Der vordere Vorsprung beinhaltet dabei eine Fläche für den Lichtaustritt und befindet sich mit einem Teil seines Rauminhaltes in den Ausschnitten für den Lichtleiterteil, die hinteren Vorsprünge sind hin zur Rückabdeckung gerichtet und die Lichtleiste befindet sich zwischen den hinteren Vorsprüngen. Die Lichtleiste befindet sich dann hinter dem vorderen Vorsprung, sodass das Licht von dieser am intensivsten nach vorne abgestrahlt wird. Dabei kann ein Teil des Lichts in den Lichtleiterteil auch durch die hinteren die Lichtleiste umgebenden Vorsprünge eindringen, so dass ein größerer Teil des von der Lichtleiste eindringenden Lichts genutzt werden kann. Die hinteren Vorsprünge können dabei im kleineren Maße auch Licht ausstrahlen, sodass sie beim Anblick auf den beleuchteten Kühlergrill sichtbar sind und den plastischen Effekt der Beleuchtung der Baugruppe weiter verstärken.

Wenigstens ein hinterer Vorsprung kann an seinem vorderen Ende eine Fläche umfassen, die um nicht mehr als 45° bezogen auf die vertikale Richtung, vorzugsweise um nicht mehr als 30°, geneigt ist. Der Lichtleistenhalter kann dann teilweise oder vollständig hinter dem Lichtleiterteil verborgen werden, so dass er das Design nicht stört. Darüber hinaus kann diese annähernd senkrechte Fläche durch eine Lichtleiste beleuchtet werden, sodass tiefer im Kühlergrill als die Hauptfläche für den Lichtaustritt das Licht mit höherer Intensität ausgestrahlt werden kann, um einen noch wertvolleren Lichteffekt zu erzielen. Diese annähernd senkrechte Fläche, vorzugsweise auf jeder der beiden hinteren Vorsprünge, wird dann weniger hell beleuchtet als die Hauptfläche für Lichtaustritt, aber heller als die anderen Flächen des Lichtleiterteils.

Vorzugsweise wird der Lichtleiterteil mittels einer Lichtleistenhalterung am hinteren Rahmen befestigt, so dass es nicht notwendig ist, diese beiden Komponenten separat an die Rückabdeckung anzubringen.

### Erläuterung der Zeichnungen

Die Darstellung der Erfindung wird weiter anhand von Ausführungsbeispielen erläutert, die unter Nutzung von Zeichnungen beschrieben sind, wobei zeigen die:

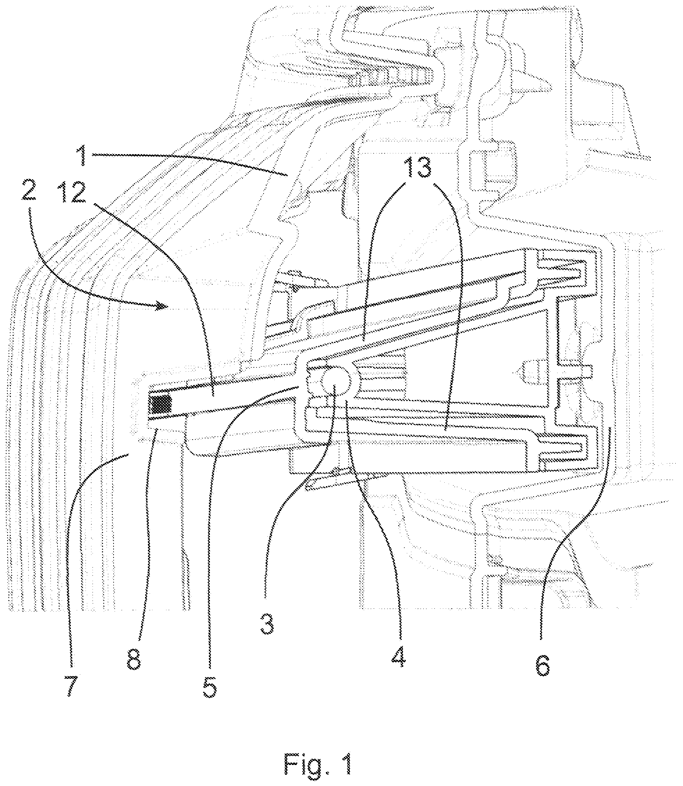

Fig. 1 die perspektivische Ansicht der erfindungsgemäßen Baugruppe in einer schematischen Schnittdarstellung, wobei der Schnitt durch die Luftdurchgangsöffnung geführt wird, sodass seitlich die diese Öffnung bestimmende Rippe und die Anordnung des Lichtleiterteils in dem Ausschnitt für den Lichtleiterteil in der Rippe sichtbar ist,

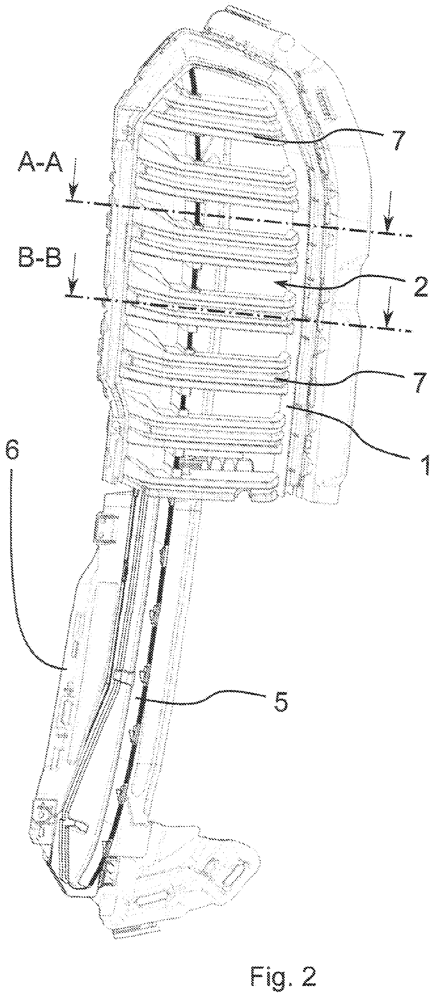

Fig. 2 die perspektivische Ansicht der erfindungsgemäßen Baugruppe in einer schematischen Schnittdarstellung, während die Hälfte des Kühlergrills unsichtbar gemacht wird, sodass der Lichtleiterteil hinter dem Kühlergrill und seine Anordnung relativ zum Kühlergrill und der Rückabdeckung sichtbar sind.

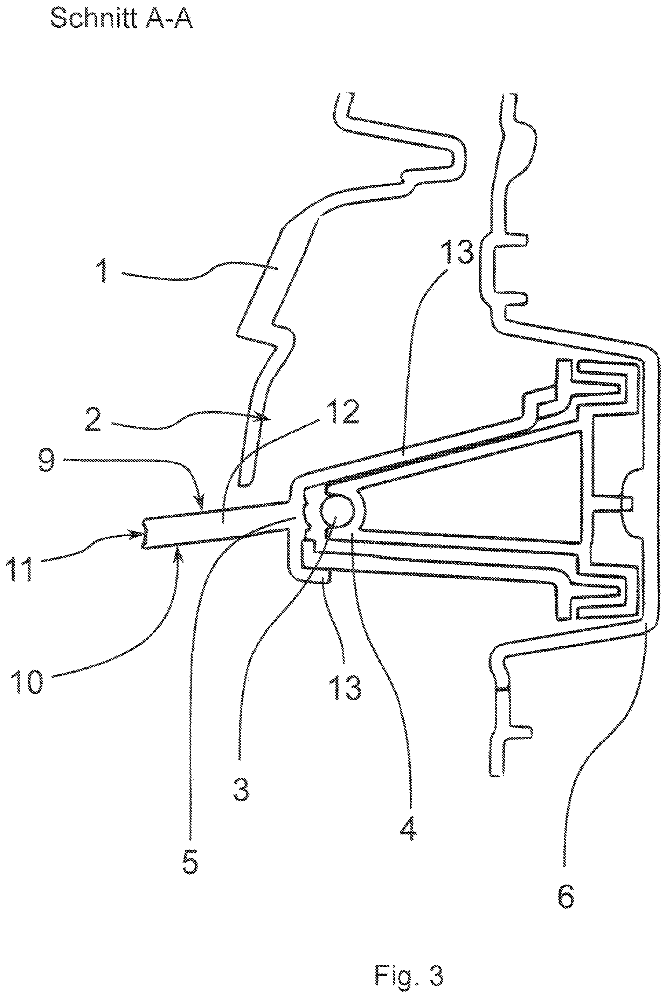

Fig. 3 eine schematische Darstellung des in Fig. 2 angedeuteten Schnitts A-A, wobei die Schnittebene durch die Öffnung zwischen den Rippen verläuft und die gegenseitige Anordnung aller Bauteile der Baugruppe, insbesondere des Lichtleiterteils und der Lichtleiste und deren Befestigung an der Rückabdeckung der Baugruppe ersichtlich ist, und die

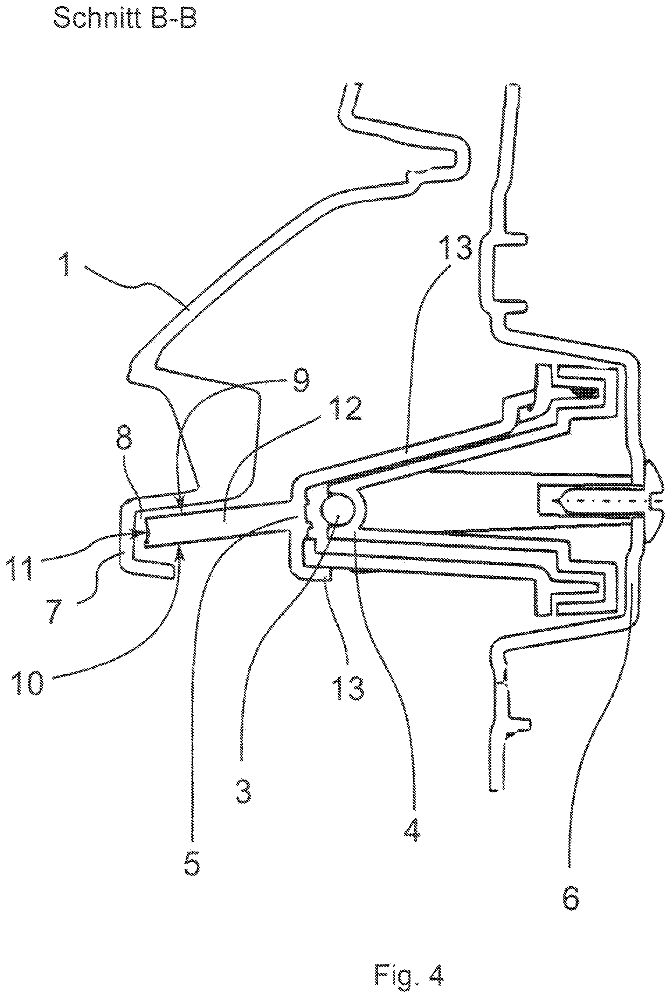

Fig. 4 eine schematische Darstellung des in Fig. 2 angedeuteten Schnitts B-B, wobei die Schnittebene durch eine der Rippen verläuft, wobei insbesondere die Anordnung des Lichtleiterteils im Ausschnitt für den Lichtleiterteil zu erkennen ist.

### Ausführungsbeispiele der Erfindung

Die Erfindung, deren Gegenstand die Baugruppe eines leuchtenden Kühlergrills ist, insbesondere für einen Personenkraftfahrzeug, soll im Folgenden anhand der in den Figuren dargestellten Ausführungsbeispiele erläutert.

Die Fig. 1 bis 4 zeigen die Baugruppe des erfindungsgemäßen leuchtenden Kühlergrills, umfassend einen Kühlergrill 1, eine Lichtleiste 3, einen Lichtleistenhalter 4, einen Lichtleiterteil 5 und eine Rückabdeckung 6. Die Lichtleiste 3 ist an der Rückabdeckung 6 angebracht, wobei sie hin nach vorne zum Kühlergrill 1 gerichtet ist. Sie kann bevorzugt in der oberen Hälfte der Höhe der Rippen 7 angeordnet werden, damit sie für den Betrachter, der den Kühlergrill 1 von vorne und von oben betrachtet, was für die Kühlergrills üblich ist, beispielsweise wenn der Betrachter ein entgegenkommender Fahrer oder Passant ist, besser sichtbar ist Das Lichtleiterteil 5 ist vor der Lichtleiste 3 angeordnet, so dass das Licht von der Lichtleiste 3 durch dieses durchgeht und dieses Licht in den Raum vor der Baugruppe und auf einige Flächen des Kühlergrills 1 ausgestrahlt wird. Der Kühlergrill 1 stellt den vorderen Teil der Baugruppe dar, also den dem Raum vor dem Fahrzeug zugewandten Teil und umfasst den umlaufenden Teil und darin die Menge von Rippen 7, die in der gezeigten Ausführung vertikal sind. Zwischen den Rippen 7 befinden sich Luftdurchgangsöffnungen 2, durch welche die Luft durch den Kühlergrill 1 in die Baugruppe hin und von der Baugruppe zum Kühler, zur Klimaanlage usw. strömen kann. Als Luftdurchgangsöffnungen 2 sind hier also die Zwischenräume zwischen den Rippen 7. Der Kühlergrill 1 besteht aus lichtundurchlässigem Material, insbesondere aus Kunststoff, und kann die Form der aus dem Stand der Technik bekannten gewöhnlichen Kühlergrills aufweisen. In Fig. 2 ist nur die Hälfte des Kühlergrills 1 dargestellt, damit auch die dahinter liegenden Komponenten sichtbar sind. Die nicht angezeigte Hälfte ist symmetrisch zur dargestellten ausgeführt, wie es bei Kühlergrills üblich ist.

Die Rippen 7 umfassen auf ihrer Rückseite, d.h. der Rückabdeckung 6 und dem Lichtleiterteil 5 zugewandten Seite, Ausschnitte 8 für den Lichtleiterteil, vorzugsweise in der gesamten Breite dieser Rippen 7. Vorteilhafterweise weisen diese Ausschnitte alle Rippen 7 auf dem Kühlergrill, aber in einigen Ausführungen können auf dem Kühlergrill 1 auch Rippen 7 ohne Ausschnitte 8 für den Lichtleiterteil sein, insbesondere beispielsweise die äußeren Rippen 7. Die Ausschnitte 8 für den Lichtleiterteil können durch ihre Form den Querschnitt des Lichtleiterteils 5 oder seines vorderen Abschnitts annähernd kopieren. Vorzugsweise erstrecken sich die Ausschnitte 8 für den Lichtleiterteil auf mindestens ein Viertel der Stärke der Rippen 7, wobei die Stärke das Maß ist, das entlang der Fahrzeuglängsachse, d.h. in Richtung von vorne nach hinten, gemessen wird. Sie erstrecken sich vorteilhafter mindestens über einen Drittel, noch vorteilhafter mindestens über die Hälfte und am vorteilhaftesten mindestens über zwei Drittel der Stärke, wie in Fig. 1 angedeutet. Das Vorkommen der Ausschnitte 8 für den Lichtleiter und die Anordnung des Lichtleiterteils 5 in ihnen, wie im Weiteren ausführlicher beschrieben wird, ermöglicht die Designwertigkeit sowie die gewährte Lichtwirkung des beleuchteten Kühlergrills 1 zu verbessern. Insbesondere ist es möglich, alle die Luftdurchgangsöffnungen 2 eingrenzenden Oberflächen so zu beleuchten, dass der Kühlergrill 1 das Licht nicht nur direkt aus dem Lichtleiterteil 5, sondern auch indirekt durch die Reflexion auf dem lichtundurchlässigem Kühlergrill 1, z.B. der Seitenwand der Rippen 7 ausstrahlt. Darüber hinaus ist der Lichtleiterteil 5 durch seine Verschiebung mehr nach vorne dank der Ausschnitte 5 für den Lichtleiterteil bei Frontalansicht des Fahrzeugs besser sichtbar, da er weniger im Kühlergrill 1 versenkt ist. Ein größerer Teil des vom Lichtleiterteil 5 ausgestrahlten Lichts wird überdies vor das Fahrzeug ausgestrahlt und somit verwertet; ein kleinerer Teil des Lichts wird nur innerhalb des Kühlergrills 1 ausgestrahlt, wo es keine Lichtfunktion erfüllt und somit die ungenutzte Leistung des beleuchteten Kühlergrills 1 darstellt. Der Ausschnitt 8 für den Lichtleiterteil in den Rippen 7 ist in Fig. 1 und 4 dargestellt. Die Fig. 4 zeigt nicht die untere Hälfte der Rippe 7, zum Beispiel würde der Rest dieser Rippe 7 die gleiche Form haben, wie in Fig. 1 zu sehen ist.

Die Rückabdeckung 6 besteht ebenfalls aus einem lichtundurchlässigen Kunststoff und bildet die Rückseite der Baugruppe, die nach Einbau ins Fahrzeug, in die Montageöffnung im Frontbereich, hin zum Fahrgastraum, dem Motor usw. zugewandt ist. Der Kühlergrill 1 und die Rückabdeckung 6 sind umlaufend miteinander verbunden, beispielsweise durch Schrauben, Kleber, Formschluss, flexible Kunststoffclips an einer Komponente, die in die komplementären Öffnungen in der anderen Komponente eingreifen usw. Der Kühlergrill 6 und die Rückabdeckung 6 definieren den Innenraum der Baugruppe des beleuchteten Kühlergrills 1, in dem sich die anderen aufgeführten Komponenten befinden. Die Luft kann aus der Baugruppe durch die Öffnungen in der Rückabdeckung 6 z.B. zum Kühler abgeleitet werden.

Die Lichtleiste 3 durchläuft den größten Teil der Breite der Baugruppe und ist beispielsweise horizontal ausgerichtet. Sie kann jedoch beispielsweise zur Mitte des Kühlergrills 1 hin höher oder tiefer verlaufen als an den Rändern des Kühlergrills 1. Bevorzugt durchläuft die Lichtleiste 3 mindestens drei Viertel der Breite des Kühlergrills 1, beispielsweise kann sich hinter jeder Luftdurchgangsöffnung 2 ein Abschnitt der Lichtleiste 3 für den Luftdurchgang oder hinter jedem mit Ausnahme der beiden äußersten Öffnungen 2 befinden. Die vertikale Position der Lichtleiste 3 kann grundsätzlich beliebig sein, sofem sie das Leiten des Lichts durch den Lichtleiterteil 5vor das Fahrzeug ermöglicht, die Lichtleiste 5 selbst muss also nicht einmal sichtbar sein, sie kann sich beispielsweise unter der Ebene der unteren Enden der Luftdurchgangsöffnungen 2 oder über die Ebene ihrer oberen Enden erstrecken. Der Lichtleiterteil 5 kann dann in Seitenansicht gekrümmt sein, um das Licht beispielsweise zum mittleren Drittel der Höhe der Luftdurchgangsöffnungen 2 zu leiten. Vorzugsweise befindet sich jedoch die Lichtleiste 3 hinter den Luftdurchgangsöffnungen 2 zusammen mit den anderen Beleuchtungskomponenten.

Die Lichtleiste 3 in der dargestellten Ausführung umfasst einen länglichen Lichtleiter mit einem etwa konstanten Querschnitt, hier kreisförmig, er kann aber auch andersförmig sein, z.B. pilzförmig, was bei den Lichtleitern eine gewöhnliche Form darstellt. Die Pilzform ergibt sich aus der geschlossenen Kurve, die symmetrisch um eine in der gleichen Ebene wie die gesamte Kurve liegende Achse ist, wobei diese Kurve vier Abschnitten aufweist, im ersten Abschnitt ist sie nach innen gekrümmt, z. B. geht es um ein Kreissektor, der zweite und dritte Abschnitt sind in andere Richtung gekrümmt, d. h. nach außen, wobei der erste Abschnitt zwischen ihnen liegt, und im vierten Abschnitt ist die Kurve gerade, wobei sich der vierte Abschnitt gegenüber dem ersten befindet und die Symmetrieachse durch die Mitte des ersten und vierten Abschnitts verläuft. Der vierte Abschnitt kann Ablenkelemente enthalten. Der Lichtleiter kann unabhängig von seinem Querschnitt an seiner Rückseite Ablenkelemente umfassen und in der dargestellten Ausführung umfasst er ferner an seinen Enden auch zwei Lichteintrittsflächen. Die Lichtleiste 3 umfasst weiter zwei Punktlichtquellen, insbesondere LED-Lichtquellen, die jeweils zu einer der Lichteintrittsflächen an den Enden des Lichtleiters gerichtet sind. Alternativ kann die Lichtleiste 3 beispielsweise als eine Reihe von Punktlichtquellen realisiert werden, in solchem Fall kann sie zusätzlich eine entlang dieser Reihe verlaufende homogenisierende Linse aufweisen.

Der Lichtleistenträger 4 dient zur Befestigung der Lichtleiste 3 an der Rückabdeckung 6. Der Lichtieistenträger4 verläuft entlang der gesamten Lichtleiste 3 und umfasst einen vorderen Teil mit einer länglichen Öffnung komplementär zu der Form des Lichtleiters und einen hinteren Teil zur Befestigung an die Rückabdeckung 6. Der Lichtleiter kann im vorderen Bereich der Öffnung z.B. durch einen vorgespannten Formschluss, Verklebung usw. befestigt werden. Die Rückseite kann zur Befestigung an die Rückabdeckung 6 Öffnungen oder Halterungen. für Schrauben enthalten, sie kann auf die Rückabdeckung geklebt werden, mit formschlüssigen Elementen, z.B. Federclips u.ä. befestigt werden. Alternativ kann der Lichtleistenhalter 4 fester Bestandteil der Rückabdeckung 6 sein. Die Vorderseite des Lichtleistenträgers 4, zum Beispiel die Oberfläche der Lücken für den Lichtleiter, kann in einigen Ausführungen mit reflektierendem Material beschichtet werden. Darüber hinaus kann die Vorderseite der Rückabdeckung 6 teilweise mit reflektierendem Material beschichtet werden. Die Form der Lichtleiste 3, des Lichtleistenhalters 4 und deren Anordnung untereinander und in Bezug zu anderen Teilen der Baugruppe sind am besten in den Fig. 3 und 4 zu sehen.

Der Lichtleiterteil 5 besteht aus einem lichtdurchlässigen Material, beispielsweise gleich wie der Lichtleiter der Lichtleiste 3. Dieses Material kann beispielsweise Glas oder Plexiglas sein, insbesondere PMMA oder Polycarbonat; zum Beispiel kann jedes zumindest teilweise lichtdurchlässige Polymermaterial verwendet werden. Der Lichtleiterteil 5 dient als Lichtleiter, Linse und/oder homogenisierendes Element für das Licht aus der Lichtleiste 3 und erstreckt sich somit entlang dieser. Der Lichtleiterteil 5 befindet sich mit einem Teil seines Rauminhaltes in den Vorsprüngen 8 für den Lichtleiterteil der Rippen 7, womit der Lichtleiterteil 5, insbesondere die lichtausstrahlenden Flächen, näher an den Raum vor dem Fahrzeug verlegt werden können, so dass sie besser sichtbar sind.

Der Lichtleiterteil 5 umfasst bevorzugt einen vorderen Vorsprung 12 und zwei hintere Vorsprünge 13. Diese Vorsprünge können beispielsweise einen annähernd rechteckigen Querschnitt aufweisen, insbesondere die hinteren Vorsprünge 13 können alternativ einen gekrümmten Querschnitt aufweisen, beispielsweise wie in den Fig. 3 und 4 dargestellt ist. Der vordere Vorsprung 12 umfasst eine Frontoberfläche 11, welche die Hauptfläche für den Lichtaustritt aus dem Lichtleiterteil 5 darstellt. Ferner umfasst sie auch die obere Oberfläche 9 und die untere Oberfläche 10. Diese beiden Oberflächen können auch bis zu einem gewissen Maße Licht ausstrahlen, so dass sie beim Erleuchten der Lichtleiste 3 deutlicher sichtbar sind und zusätzlich das Licht nach oben und unten ausstrahlen, womit die Flächen beleuchtet werden, welche die einzelnen Luftdurchgangsöffnungen 2 eingrenzen.

Bei den meisten Luftdurchgangsöffnungen 2 können diese Flächen beispielsweise die zwei Seitenflächen sein, die sich jeweils auf einer Rippe 7 aus dem entsprechenden Paar der benachbarten Rippen 7 befinden. Ferner auch die obere und die untere Oberfläche am umlaufenden· Abschnitt des Kühlergrills 1. Bevorzugt greift ein Abschnitt des Lichtleiterteils 5 in einigen oder allen Luftdurchgangsöffnungen 2 zwischen die obere und untere Fläche ein. In Fig. 1 und 3 ist die obere Fläche annähernd horizontal dargestellt und ist zu entnehmen, dass sie durch den vorderen Vorsprung 12 bestrahlt wird. Bei den äußeren Luftdurchgangsöffnungen 2 kann eine der Seitenflächen auch durch den umlaufenden Abschnitt des Kühlergrills 1 begrenzt sein. Die Lichtleiste 3 befindet sich bevorzugt mit dem größten Teil ihres Rauminhaltes zwischen hinteren Vorsprüngen 13 hinter der Lichteintrittsfläche an der Rückseite des vorderen Vorsprungs 12. Mindestens ein hinterer Vorsprung 13 umfasst bevorzugt an seinem vorderen Ende einen annähernd senkrechten Abschnitt, beispielsweise in vertikaler Richtung um weniger als 45° geneigt. Dieser Abschnitt wird aufgrund der Anordnung der Lichtleiste 3 zwischen den hinteren Vorsprüngen 13 relativ hell durchleuchtet - d.h. heller als der Rest des jeweiligen hinteren Vorsprungs 13, aber weniger hell als der vordere Vorsprung 12, insbesondere seine Frontoberfläche 11. Der Lichtleiterteil 5 erscheint dann in der Frontansicht des Kühlergrills 1 nicht nur als eine helle Lichtlinie, gebildet durch die vordere Oberfläche 11, sondern auch als eine weniger helle Lichtlinie, gebildet durch das vordere Ende des hinteren Vorsprungs 13, bevorzugt der beiden hinteren Vorsprünge 12, wie in Fig. 1, 3 und 4 dargestellt ist. Ferner kann in der Frontansicht beispielsweise die obere Oberfläche 9 sichtbar sein, zum Beispiel kann die vordere Oberfläche 11 des vorderen Vorsprungs 12 am hellsten leuchten, die vordere Oberfläche des annähernd senkrechten Abschnitts kann weniger hell leuchten und die obere Oberfläche 9 oder die untere Oberfläche 10 noch weniger hell leuchten. In der gezeigten Ausführung ist aufgrund der Neigung des vorderen Vorsprungs 12 die obere Oberfläche 9 besser sichtbar, die untere Oberfläche 10 ist dem Raum vor dem Fahrzeug weniger ausgesetzt.

Der Lichtleiterteil 5 kann teilweise aus lichtundurchlässigem Material bestehen, beispielsweise einem üblichen Kunststoff zur Herstellung von Kühlergrills. Der Fig. 4 ist zu entnehmen, dass beide hintere Vorsprünge 12 zwei Teile umfassen. Der erste Abschnitt ist einstückig mit dem vorderen Vorsprung 12, d.h. lichtleitend, zumindest teilweise aus lichtdurchlässigem Material. Der zweite, hintere Abschnitt kann aus lichtundurchlässigem Material bestehen und kann insbesondere zur Befestigung des Lichtleiterteils 5 dienen. Lichtundurchlässiges Material kann billiger oder fester oder flexibler sein als lichtdurchlässiges Material, sodass durch seine Verwendung der Preis gesenkt oder die mechanische Widerstandsfähigkeit des Lichtleiterteils 5 verbessert wird. Ferner oder alternativ kann das lichtundurchlässige Material einen Teil der Lichtaustrittsflächen des Lichtleiterteils 5 bedecken, beispielsweise die vordere Oberfläche 11. Ein solches lichtundurchlässiges Material wirkt daher als Blende und kann die Gestalt des austretenden Lichts, die Form der auf der erleuchteten Baugruppe sichtbaren Lichtlinie usw. beeinflussen.

Der Lichtleiterteil 5 kann direkt an der Rückabdeckung 6 montiert werden. Vorzugsweise ist er jedoch an dem Lichtleistenhalter 4 befestigt, wobei die Lichtleiste dann an der Rückabdeckung 6 angebracht ist, was die Montage vereinfacht, da der Lichtleiterteil 5 dann zusammen mit der Lichtleiste 3 an die Rückabdeckung 6 befestigt wird. Der Lichtleiterteil 5 kann auch mit einem weiteren separaten Teil befestigt werden, wie z.B. durch einen Rahmen, der ein seiner Vorsprünge umschließt und an der Rückabdeckung 6 oder Lichtleistenhalter 4 befestigt ist. Der Lichtleiterteil 5 und der Lichtleistenhalter 4 können gegebenenfalls zusammen mit der Rückabdeckung 6 einen geschlossenen oder isolierten Raum abgrenzen, in dem sich die Lichtleiste 3 und seine Lichtquellen befinden. Dieser Raum kann beispielsweise auch Elemente für die Entlüftung bzw. Feuchtigkeitsabfuhr umfassen, wie z.B. eine Durchlaufhülse mit einem Filter zum Auffangen von Staubpartikeln. Die Lichtquellen sowie die Lichtleiste 3 sind dann vor Schmutz oder Feuchtigkeit geschützt.

In anderen Ausführungen kann es eine andere Form der Rippen 7 und damit auch der Luftdurchgangsöffnungen 2 und/oder deren Anzahl geben. Die Rippen 7 können zum Beispiel geneigt, horizontal sein oder durch ein Gitter usw. ersetzt werden. Vorzugsweise sind die Rippen 7 jedoch annähernd vertikal, beispielsweise weichen sie nicht um mehr als 45°, vorzugsweise um mehr als 30° von der vertikalen Richtung ab. Alternativ kann der Querschnitt des vorderen Vorsprungs 12 beispielsweise die Form ein Halbkreis, eines Quadrats, eines Teils der Ellipse usw. aufweisen. In einigen Ausführungen kann der Lichtleiterteil 5 homogenisierende Elemente oder andere Elemente aufweisen, welche die Form des durchgehenden Lichts beeinflussen. Es kann sich dabei zum Beispiel um Aufrauen der Oberfläche, Ritze, Vorsprünge, Vertiefungen, abgewinkelte Flächen usw. handeln. Der Lichtleiterteil 5 kann beispielsweise in seinem lichtdurchlässigen Material farbige Beimischung enthalten.

Die erfindungsgemäße Baugruppe kann in einigen Ausführungen für die Bereitstellung von zusätzlichen Beleuchtungsfunktionalitäten ausgelegt werden, wie z.B. Fahrtrichtungsanzeige, Aufblinken beim Entriegeln oder Verriegeln des Fahrzeugs, Einstellen der Beleuchtungsintensität usw. Zu diesen Zwecken kann die Baugruppe eine Steuereinheit umfassen oder an eine vorhandene Steuereinheit im Fahrzeug angeschlossen sein. In einigen Ausführungen kann sich der gesamte Lichtleiterteil 5 auf den entsprechenden Abschnitten entlang seiner Länge in Ausschnitten 8 für den Lichtleiterteil befinden. In der Frontansicht kann der Lichtleiterteil 5 oder seine Lichtaustrittsfläche beispielsweise gekrümmt oder gewellt sein, beispielsweise können seine durch beliebige Luftdurchgangsöffnung 2 sichtbare Abschnitte jeweils in anderer Höhe sein als die durch benachbarte Luftdurchgangsöffnungen 2 sichtbare Abschnitte des Lichtleiterteils 5.

Die oben genannten Alternativen und Modifikationen können miteinander kombiniert werden. Beispielsweise können also verschiedene Formen und Anzahl der Rippen 7, der Luftdurchgangsöffnungen 2 und/oder Ausschnitte 8 für den Lichtleiterteil mit verschiedenen Materialien dieser oder anderer Komponenten, mit unterschiedlichen Formen des Lichtleiterteils 5, verschiedenen Lichtfunktionalitäten, verschiedenen Homogenisierungselementen usw. kombiniert werden.

## Patentansprüche

1. Baugruppe des leuchtenden Kühlergrills (1) für den Einbau im Fahrzeugfrontbereich, umfassend einen Kühlergrill (1) aus lichtundurchlässigem Material, der eine nichtleere Menge von Rippen (7) aufweist, welche die Luftdurchgangsöffnungen (2) begrenzen, wobei ferner die Baugruppe eine Lichtleiste (3), einen Lichtleistenhalter (4), einen Lichtleiterteil (5), der zumindest teilweise aus einem lichtdurchlässigen Material besteht, und eine Rückabdeckung (6) umfasst, die dazu eingerichtet ist, zwischen dem Kühlergrill (1) und einem Raum unter einer Fahrzeugfrontklappe angeordnet zu sein, wobei der Kühlergrill (1) mit der Rückabdeckung (6) verbunden ist, wobei die Lichtleiste (3) mittels eines Lichtleistenhalters (4) an der Rückabdeckung (6) befestigt ist, wobei die Lichtleiste (3) zwischen der Rückabdeckung (6) und dem Kühlergrill (1) angeordnet ist und über den größten Teil der Breite der Baugruppe verläuft, und wobei jede Rippe (7) aus der Menge der Rippen (7) in der Richtung von der Rückabdeckung (6) einen Ausschnitt (8) für den Lichtleiterteil (5) aufweist, wobei der Lichtleiterteil (5) entlang der Lichtleiste (3) zwischen der Lichtleiste (3) und dem Kühlergrill (1) verläuft und mit einem Teil seines Rauminhaltes in den Ausschnitten (8) für den Lichtleiterteil (5) aller Rippen (7) aus der Menge der Rippen (7) eingreift,
wobei der Lichtleiterteil (5) eine obere Oberfläche (9), eine untere Oberfläche (10) und eine vordere Oberfläche (11) umfasst, **dadurch gekennzeichnet, dass** jeder Ausschnitt (8) für den Lichtleiterteil (5) auf einem Teil der Länge des Lichtleiterteils (5) die komplette vordere Oberfläche (11) und ein Teil der oberen Oberfläche (9) und der unteren Oberfläche (10) umschließt.

2. Baugruppe des leuchtenden Kühlergrills (1) nach Anspruch 1, **dadurch gekennzeichnet, dass** die Lichtleiste (3) einen Lichtleiter mit zwei freien Enden umfasst, wobei jedes freie Ende des Lichtleiters mit einer Lichtquelle versehen ist.

3. Baugruppe des leuchtenden Kühlergrills (1) nach Anspruch 1 oder 2, **dadurch gekennzeichnet, dass** mindestens eine der Luftdurchgangsöffnungen (2) durch die obere Oberfläche, die untere Oberfläche und den Paar der Seitenflächen, die Teil des Kühlergrills (1) sind, abgrenzen, wobei durch die Seitenflächen ein Ausschnitt (8) für den Lichtleiterteil (5) verläuft, wobei der Lichtleiterteil (5) in den Raum zwischen der oberen Oberfläche und der unteren Oberfläche der Luftdurchgangsöffnung (2) eingreift.

4. Baugruppe des leuchtenden Kühlergrills (1) nach beliebigen der Ansprüche 1 bis 3, **dadurch gekennzeichnet, dass** der Lichtleiterteil (5) teilweise aus lichtundurchlässigem Material erzeugt ist.

5. Baugruppe des leuchtenden Kühlergrills (1) nach beliebigen der Ansprüche 1 bis 4, **dadurch gekennzeichnet, dass** der Lichtleiterteil (5) einen vorderen Vorsprung (12) und zwei hintere Vorsprünge (13) umfasst, die alle den größten Teil der Länge des Lichtleiterteils (5) durchlaufen, wobei der vordere Vorsprung (12) die Lichtaustrittsfläche umfasst und mit einem Teil seines Rauminhaltes in die Ausschnitte (8) für den Lichtleiterteil (5) eingreift, und wobei die hinteren Vorsprünge (13) vom vorderen Vorsprung (12) hin zur Rückabdeckung (6) gerichtet sind und die Lichtleiste (3) sich zwischen den hinteren Vorsprüngen (13) befindet.

6. Baugruppe des leuchtenden Kühlergrills (1) nach Anspruch 5, **dadurch gekennzeichnet, dass** wenigstens ein der hinteren Vorsprünge an seinem vorderen Ende eine Fläche aufweist, die um nicht mehr als 45° gegenüber der vertikalen Richtung geneigt ist.

## Claims

1. Assembly of the illuminated radiator grille (1) for installation in the front region of a vehicle, comprising a radiator grille (1) made of opaque material, which has a non-empty set of ribs (7) which limit the air passage openings (2), wherein the assembly further comprises a lighting strip (3), a lighting strip holder (4), a light guide part (5) which is made at least partially from a translucent material, and a rear cover (6) which is configured to be arranged between the radiator grille (1) and a space below a vehicle front hood, wherein the radiator grille (1) is connected to the rear cover (6), wherein the lighting strip (3) is attached to the rear cover (6) by means of a lighting strip holder (4), wherein the lighting strip (3) is arranged between the rear cover (6) and the radiator grille (1) and extends over the majority of the width of the assembly, and wherein each rib (7) of the set of ribs (7) has a cut-out (8) for the light guide part (5) in the direction of the rear cover (6), wherein the light guide part (5) extends along the lighting strip (3) between the lighting strip (3) and the radiator grille (1) and engages with part of its volume In the cut-outs (8) for the light guide part (5) of all the ribs (7) from the set of ribs (7),
wherein the light guide part (5) comprises an upper surface (9), a lower surface (10) and a front surface (11), **characterized in that** each cut-out (8) for the light guide part (5) surrounds the entire front surface (11) and part of the upper surface (9) and the lower surface (10) over part of the length of the light guide part (5).

2. Assembly of the illuminated radiator grille (1) according to claim 1, **characterized in that** the lighting strip (3) comprises a light guide with two free ends, wherein each free end of the light guide is provided with a light source.

3. Assembly of the illuminated radiator grille (1) according to claim 1 or 2, **characterized in that** at least one of the air passage openings (2) is delimited by the upper surface, the lower surface and the pair of side faces that are part of the radiator grille (1), wherein a cut-out (8) for the light guide part (5) extends through the side faces, wherein the light guide part (5) engages in the space between the upper surface and the lower surface of the air passage opening (2).

4. Assembly of the illuminated radiator grille (1) according to any one of claims 1 to 3, **characterized in that** the light guide part (5) is made partially from an opaque material.

5. Assembly of the illuminated radiator grille (1) according to any one of claims 1 to **4, characterized in that** the light guide part (5) comprises a front projection (12) and two rear projections (13), all of which extend over the majority of the length of the light guide part (5), wherein the front projection (12) comprises the light-emitting face and engages with part of its volume in the cut-outs (8) for the light guide part (5), and wherein the rear projections (13) are directed from the front projection (12) towards the rear cover (6) and the lighting strip (3) is located between the rear projections (13).

6. Assembly of the illuminated radiator grille (1) according to claim 5, **characterized in that** at least one of the rear projections has a face at its front end that is inclined by no more than 45° relative to the vertical direction.

## Revendications

1. Ensemble de calandre éclairée (1) destinée à être montée dans la zone avant du véhicule, comprenant une calandre (1) en matériau opaque qui présente une quantité non vide de nervures (7) qui délimitent les ouvertures de passage d'air (2), dans lequel l'ensemble comprend de plus une barrette lumineuse (3), un support de barrette lumineuse (4), une partie de guide de lumière (5) qui se compose au moins partiellement d'un matériau transparent, et un capot arrière (6) qui est conçu afin d'être disposé entre la calandre (1) et un espace sous un volet avant du véhicule, dans lequel la calandre (1) est reliée au capot arrière (6), dans lequel la barrette lumineuse (3) est fixée au capot arrière (6) au moyen d'un support de barrette lumineuse (4), dans lequel la barrette lumineuse (3) est disposée entre le capot arrière (6) et la calandre (1) et s'étend sur la plus grande partie de la largeur de l'ensemble, et dans lequel chaque nervure (7) de la quantité de nervures (7) en direction du capot arrière (6) présente une découpe (8) pour la partie de guide de lumière (5), dans lequel la partie de guide de lumière (5) s'étend le long de la barrette lumineuse (3) entre la barrette lumineuse (3) et la calandre (1) et s'engage avec une partie de son volume dans les découpes (8) pour la partie de guide de lumière (5) de toutes les nervures (7) de la quantité de nervures (7),
dans lequel la partie de guide de lumière (5) comprend une surface supérieure (9), une surface inférieure (10) et une surface avant (11), **caractérisé en ce que** chaque découpe (8) pour la partie de guide de lumière (5) sur une partie de la longueur de la partie de guide de lumière (5) entoure la surface avant (11) complète et une partie de la surface supérieure (9) et la surface inférieure (10).

2. Ensemble de calandre éclairée (1) selon la revendication 1, **caractérisé en ce que** la barrette lumineuse (3) comprend un guide de lumière avec deux extrémités libres, dans lequel chaque extrémité libre du guide de lumière est pourvue d'une source de lumière.

3. Ensemble de calandre éclairée (1) selon la revendication 1 ou 2, **caractérisé en ce qu'** au moins une des ouvertures de passage d'air (2) délimite par la surface supérieure, la surface inférieure et la paire des surfaces latérales qui font partie de la calandre (1), dans lequel une découpe (8) pour la partie de guide de lumière (5) s'étend par les surfaces latérales, dans lequel la partie de guide de lumière (5) s'engage dans l'espace entre la surface supérieure et la surface inférieure de l'ouverture de passage d'air (2).

4. Ensemble de calandre éclairée (1) selon l'une quelconque des revendications 1 à 3, **caractérisé en ce que** la partie de guide d'air (5) est partiellement générée en un matériau opaque.

5. Ensemble de calandre éclairée (1) selon l'une quelconque des revendications 1 à 4, **caractérisé en ce que** la partie de guide de lumière (5) comprend une saillie avant (12) et deux saillies arrière (13) qui traversent toutes la plus grande partie de la longueur de la partie de guide de lumière (5), dans lequel la saillie avant (12) comprend la surface de sortie de lumière et s'engage avec une partie de son volume dans les découpes (8) pour la partie de guide de lumière (5), et dans lequel les saillies arrière (13) sont dirigées de la saillie avant (12) vers le capot arrière (6) et la barrette lumineuse (3) se trouve entre les saillies arrière (13).

6. Ensemble de calandre éclairée (1) selon la revendication 5, **caractérisé en ce qu'** au moins une des saillies arrière présente à son extrémité avant une surface qui est inclinée de pas plus de 45° par rapport à la direction verticale.
